# EUROPEAN PATENT APPLICATION

(11) **EP 1 736 969 A1**
(43) Date of publication of application: **27.12.2006**
(21) Application number: 05727487.0
(22) Date of filing: 30.03.2005
(51) Int. Cl.: G11B 7/004, G11B 7/09, G11B 7/12

(54) **READER AND DISC DETERIORATION DETECTING METHOD**

(30) Priority: 31.03.2004 JP 2004103430
(71) Applicant: Pioneer Corporation, Tokyo 153-8654 (JP)
(72) Inventor: ABE, Shinichiro, Pioneer Corporation, Kawagoe-shi, Saitama 3508555 (JP); ENOMOTO, Hiroyuki, Pioneer Corporation, Kawagoe-shi, Saitama 3508555 (JP); OOGAMI, Kazuhiko, Pioneer Corporation, Kawagoe-shi,Saitam a 3508555 (JP); KAWANA, Kazushige, Pioneer Corporation, Kawagoe-shi, Saitama 3508555 (JP); TAKAHASHI, Teruo, Pioneer Corporation, Kawagoe-shi, Saitama 3508555 (JP)
(74) Representative: Pfau, Anton Konrad
(86) International application number: PCT/JP2005/006051
(87) International publication number: WO 2005/096276

(57) **Abstract**

For providing a read apparatus and a method of detecting deterioration of a disk, which can detect the deterioration of the disk securely at a low cost, when focus adjust and tracking adjust of an optical pick-up 3 can be acted normally within adjustable range by a servo DSP 5, the deterioration of the disk is detected based on a focus adjust value and a tracking adjust value.

## Description

### BACKGROUND OF THE INVENTION

### Field of the Invention

This invention relates to a read apparatus and a method of detecting deterioration of a disk.

### Description of the Related Art

There is deterioration of an optical disk itself as one cause of occurrence of a read error of the optical disk. For example, when a surface of the disk is contaminated by obstructive substances, such as sand, dust and the like, or scratched, read error is occurred and playback cannot be acted. In recent years, optical disks for data recording become popular in general purpose area. Data recording on the optical disk is acted by using a dye recording layer, structure of which is changed by irradiating light beam thereon. Since the dye recording layer is deteriorated, the optical disk is deteriorated easily more then a read-only optical disk.

A read/write apparatus, which detects a read error rate of the optical disk at a predetermined unit hour and indicates a condition of the disk by basing on a detecting result, is disclosed in Patent Reference 1 . Since the condition of the disk is indicated, when quality of playback is deteriorated, a user does not instantly consider that it is caused by malfunction or performance degradation of the playback apparatus, and the user is led to take an action against the optical disk having a cause.

The read/write apparatus according to Patent Reference 1 judges simply that the condition of the disk is bad when the read error rate is bad. However, the read error rate becomes worse not only when the condition of the disk is bad, but also when the read apparatus malfunctions, or its performance goes down. Therefore, when the read apparatus malfunctions, or its performance goes down, it is indicated that the condition of the disk is bad, even if the condition of the disk is good. Since the error rate must be detected at the predetermined unit hour, extra hours are required in a normal action.

Patent Reference 1 is Japan Published Patent Application No. 2002-124045.

### SUMMARY OF THE INVENTION

### Objects to be solved

One object of this invention is, for example, an aforesaid problem.

### How to attain the object

In order to attain the objects, an optical pick-up device according to this invention is characterized by having a read unit for reading reflected light of light beam irradiated on a disk; and an adjust unit for adjusting the read unit in correspondence with a result of reading by the read unit, and further having a deterioration detecting unit for detecting deterioration of the disk in accordance with an adjust value of the read unit, which is adjusted within adjustable range of the adjust unit.

A method of detecting deterioration of a disk according to this invention, which uses a read apparatus including a read unit for reading reflected light of light beam irradiated on a disk and an adjust unit for adjusting the read unit in correspondence with a result of reading by the read unit, is characterized by including a step of detecting deterioration of the disk in accordance with an adjust value of the read unit, which is adjusted within adjustable range of the adjust unit.

### BRIEF DESCRIPTION OF THE DRAWINGS

Fig. 1 is a block diagram of a structure by main unit of a read apparatus of an embodiment according to the present invention;
Fig. 2 is a block diagram of an embodiment of a read/playback apparatus, to which a method of detecting deterioration of a disk according to the present invention;
Fig. 3 is a flow chart showing processes of automatic adjustment by a CPU 7a which structures the read/playback apparatus in Fig. 2; and
Fig. 4 is a flow chart showing processes of starting playback by a CPU 7a which structures the read/playback apparatus in Fig. 1.

### MARKINGS

- 10: Read apparatus
- 12: Disk
- 13: Read unit
- 14: Adjust unit
- 15: Deterioration detecting unit
- 16: Recording unit
- 17: Notifying unit

### DESCRIPTION OF EMBODIMENTS

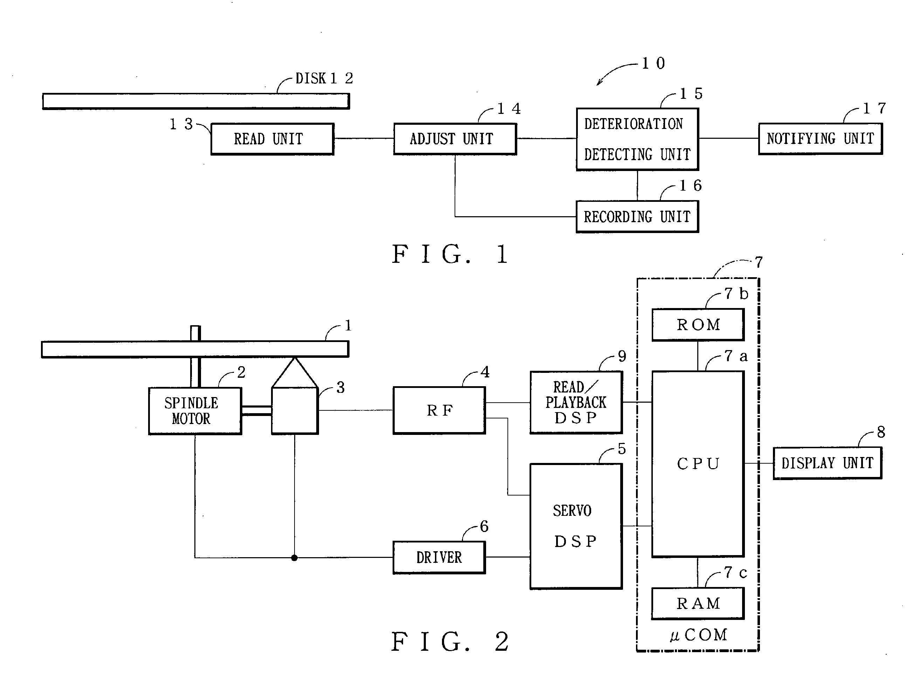

An embodiment of a read apparatus according to the present invention will be described with reference to Figs. 1 . Fig. 1 is a block diagram showing a structure of a main part of the read apparatus of the embodiment. In Fig. 1, a read apparatus 10 is structures with a read unit 13, adjust unit 14, a deterioration detecting unit 15, a recording unit 16, and a notifying unit 17. The read unit 13 includes an optical pick-up, which irradiates light beam into a disk 12 and converts reflected light received from the disk 12 to an electric signal, and reads the reflected light from the disk 12 by the electric signal converted by the optical pick-up.

The adjust unit 14 adjusts the read unit 13 in correspondence with result of reading by the read unit 13. The adjust unit 13 performs adjustment of focussing of the optical pick-up, adjustment of the optical pick-up such as tracking adjustment, adjustment of quantity of light of the light beam, and adjustment of amplification gain of the electric signal converted by the optical pick-up. The deterioration detecting unit 15 detects deterioration of the disk 12 in accordance with an adjust value of the read unit 13 when the read unit 13 is adjusted within adjustable range of the adjust unit 14.

The recording unit 16 records past data of the adjust values of the read unit 13 by the adjust unit 14. The aforesaid deterioration detecting unit 15 detects the deterioration of the disk 12 by a difference value by comparing a reference value and the adjust value of the read unit 13, which is adjusted by the adjust unit 14. The reference value can be predetermined or can be determined based on the past data of the adjust values recorded by the recording unit 16. The notifying unit 17 notifies that the deterioration detecting unit 15 detects the deterioration.

Thereby, since the deterioration of the disk is detected based on the adjust value when the read unit 13 can be adjusted within adjustable range of by the adjust unit 14, that is when it can be judged that the read apparatus having the adjust unit 14 has no malfunction or performance reduction, the deterioration of the disk cannot be detected in error caused by malfunction or performance reduction of the read apparatus. Therefore, deterioration of the disk can be securely detected. Furthermore, the deterioration of the disk can be detected by using adjustment of the read unit 13 to be acted usually in reading.

The adjust unit 13 (14) may adjust the optical pick-up to irradiate on the disk 12. Thereby, adjustment of the optical pick-up to be acted usually for reading can be used for detecting the deterioration of the disk 12.

The optical pick-up may have an objective lens for converging the light beam on the disk 12, and the adjust unit 14 may adjust the position of the objective lens in a direction to move close to and apart from the disk 12 so as to converge the light beam on the disk 12. Thereby, adjustment of focussing the optical pick-up to be acted usually for reading can be used for detecting the deterioration of the disk 12.

The optical pick-up may have an objective lens for converging the light beam on the disk 12, and the adjust unit 14 may adjust the position of the objective lens in a radial direction of the disk 12 so as to make the light beam follow on the track of the disk 12. Thereby, adjustment of tracking of the light beam to be acted usually for reading can be used for detecting the deterioration of the disk 12.

The adjust unit 14 also may adjust a quantity of light of the light beam to be irradiated so as to make the reflected light of the light beam constant. Thereby, adjustment of the quantity of light of the light beam to be acted usually for reading can be used for detecting the deterioration of the disk 12.

The adjust unit 14 also may adjust a gain of amplification of the electric signal. Thereby, adjustment of the gain of the amplification of the electric signal to be acted usually for reading can be used for detecting the deterioration of the disk 12.

The deterioration detecting unit 15 may detect the deterioration of the disk 12 by comparing an adjust value of the read unit 13 when the read unit 13 is adjusted within adjustable range of the adjust unit 14 and the past data of the adjust values recorded in the recording unit 16.

Thereby, changing of the adjust values caused by contamination or deterioration of the read apparatus can be known with adjusting history, that is the past data of the adjust values. To detect deterioration of the disk 12 by comparing the past data of the adjust values and the present adjust value, the deterioration of the disk 12 can be more securely detected.

It can be designed that the deterioration detecting unit 15 does not act to detect the deterioration of the disk 12 until the past data of the adjust values more than a predetermined quantity will be recorded. Thereby, the deterioration of the disk 12 is not acted in a condition of recording the past data of the adjust values less than the predetermined quantity. Therefore, the deterioration of the disk 12 can be detected more securely.

In the deterioration detecting unit 15, by determining the reference adjust value based on the past data of the adjust values, the deterioration of the disk may be detected by a difference between the reference adjust value and the adjust value of the read unit 13. Thereby, the deterioration of the disk 12 can be easily detected by the difference against the reference adjust value.

The notifying unit 17 may notify a fact that the deterioration detecting unit 15 detects the deterioration of the disk 12. By notifying the deterioration of the disk 12, the user can recognize that the disk 12 to be used at the present time is deteriorated by circumstances in a car or scratches, and can take preventive actions, for example making backup of the disk 12, before the disk 12 would be unreadable.

Fig. 2 is a block diagram of one embodiment of a read/playback apparatus to be applied with a method of detecting deterioration of a disk according to the present invention. As shown in Fig. 2, a disk 1 is mounted so as to be rotated by a spindle motor 2. An optical pick-up 3 irradiates a light beam to the disk 1 and receive a reflected light from the disk 1 and outputs an RF signal (electric signal) according to a quantity of the received light.

Therefore, the optical pick-up 3 includes a laser diode generating the light beam, an optical unit such as an objective lens for collecting the light beam onto the disk 1, and a light detecting unit outputting the RF signal according to the reflected light (all units not shown). The optical pick-up 3 further includes a tracking actuator for moving the aforesaid obj ective lens in a radial direction of the disk 1 and a focussing actuator for moving the objective lens close to and apart from the disk 1 (all not shown).

The RF signal outputted from the light detecting unit in the optical pick-up 3 is supplied to an RF amplifier 4. The RF amplifier 4 amplifies the supplied RF signal, and generates a playback RF signal, a focus error signal and a tracking error signal from the RF signal, and supplies these signals to a servo signal processing circuit 5 (call a servo DSP). The aforesaid RF amplifier 4 acts gain adjust as an adjust unit to adjust a gain of amplification of the RF signal so as to make output values of the RF signals from the optical pick-up 3 constant.

The aforesaid servo DSP 5 functions focus adjust as the adjust unit to adjust a position of the objective lens in a direction of moving close to and apart from the disk 1 by outputting a focus control signal based on a focus error signal outputted from the RF amplifier 4 so as to focus the light beam from the optical pick-up 3 at the disk 1. A driver 6 moves the objective lens of the optical pick-up 3 according to the supplied focus control signal.

The above servo DSP 5 functions tracking adjust to adjust a position of the objective lens in a radial direction of the disk 1 by outputting a tracking control signal based on a tracking error signal outputted from the RF amplifier 4 so as to make the light beam from the optical pick-up 3 follow a track of the disk 1. The driver 6 moves the objective lens of the optical pick-up 3 according to the supplied tracking control signal.

The servo DSP 5 generates a rotation control signal for controlling a rotation of the disk 1 based on the playback RF signal, and supplies it to the driver 6. The driver 6 drives the spindle motor 2 according to the supplied rotation control signal to rotate the disk 1 at a required speed.

The servo DSP 5 is controlled by a microcomputer 7 (call µCOM hereafter) . The µCOM 7 includes a central processing unit 7a (call CPU hereafter) for acting various processing according to a program, a ROM 7b as a read-only memory for storing the program of a process to be acted by the CPU 7a, a RAM 7c as a read/write memory having a work area to be used in a process by the CPU 7a and a data storage area for storing various data.

The aforesaid µCOM 7 is connected with a display unit 8 (corresponding to a notifying unit in claims and in the above embodiment) . The playback RF signal from the RF amplifier 4 is supplied to a read/playback signal processing circuit 9 (call read/playback DSP) to read and playback the data written in the disk 1 with the playback RF signal. The aforesaid optical pick-up 3, the RF amplifier 4 and the read/playback DSP 9 correspond to the read unit in the claims and the read unit 13 of the embodiment. The RF amplifier 4 and the servo DSP 5 correspond to the adjust unit in the claims and the adjust unit 14 of the embodiment.

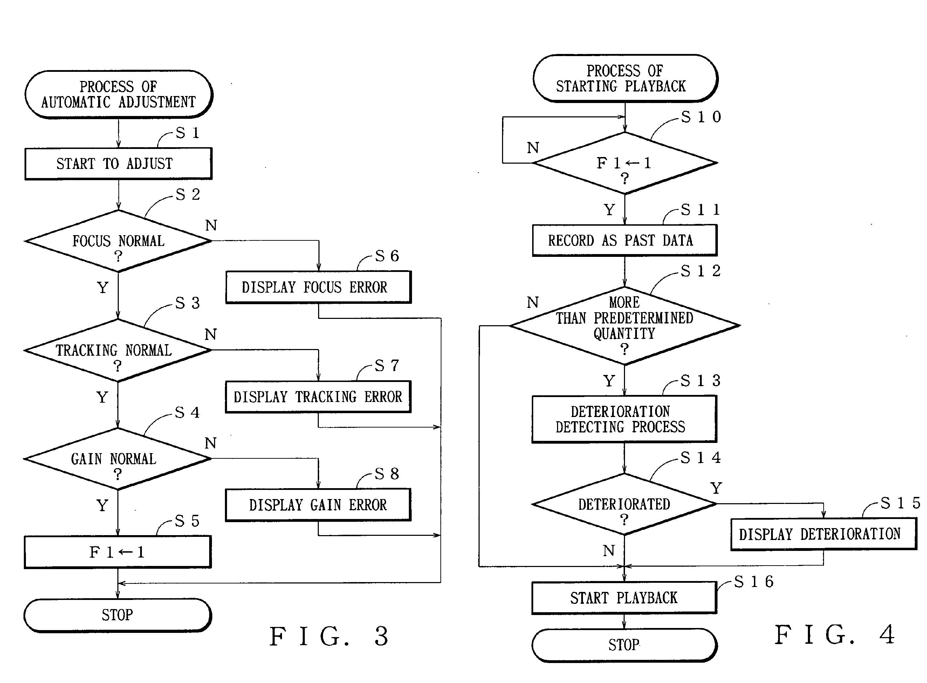

Actions of the read/playback apparatus structured as mentioned above will be described with reference to Fig. 3 showing process flow of the CPU 7a and a flow chart of Fig. 4. When the disk 1 is mounted on the read/playback apparatus, the CPU 7a controls the servo DSP 5 and read/playback DSP 9 to read management information written at inner area of the disk 1 . The CPU 7a acts automatic adjust process and playback start process in parallel with reading the management information.

In the automatic adjust process shown in Fig. 2 (3), the CPU 7a controls the servo DSP 5 and the RF amplifier 4 to act the gain adj ust, the focus adj ust, and the tracking adj ust (step S1) . Correspondingly, the servo DSP 5 acts the focus adjust and the tracking adjust, and the RF amplifier 4 acts the gain adjust.

Thereafter, the CPU 7a judges sequentially whether or not the focus adjust, the tracking adjust and the gain adjust are acted normally within each adjustable range (step S2, S3, S4). When the focus adjust is not acted normally (N at step S2) , the CPU 7a makes the display unit 8 show "FOCUS ERROR" (step S6) and stops the process.

When the tracking adjust is not acted normally (N at step S3) , the CPU 7a makes the display unit 8 show "TRACKING ERROR" (step S7) and stops the process. When the gain adjust is not acted normally (N at step S4) , the CPU 7a makes the display unit 8 show "GAIN ERROR" (step S8) and stops the process. Conversely, when the focus adjust, the tracking adjust and the gain adjust are all acted normally (Y at step S4), the CPU 7a makes a flag of adjust completion F1 turn ON (step S5) and stops the process.

In the playback start process shown in Fig. 3 (4), when focus adjust, tracking adjust, gain adjust are respectively completed normally and the flag of adjust completion F1 turns ON (Y at step S10), the CPU 7a proceeds next step S11. In the step S11, the CPU 7a functions as a recording unit so as to record adjust values given by the focus adjust, the tracking adjust and the gain adjust as past data of the adjust values in a past data area formed in the RAM 7c. Thus, the CPU 7a and RAM 7c correspond to the recording unit in claim and the recording unit 16 in this embodiment. After recording the past data of the adjust values more than a predetermined quantity (Y at step S12), the CPU 7a acts deterioration detecting process (step S13).

In the deterioration detecting process, the CPU 7a functions as the deterioration detecting unit so as to detect deterioration of the disk 1 when differences of respective adjust values by the focus adjust, the tracking adjust and the gain adjust acted in automatic adjust processes against a focus adjust reference value, a tracking adjust reference value and a gain adj ust reference value become over than threshold values. The focus adjust reference value, the tracking adjust reference value and the gain adjust reference value are determined based on the past data of the adjust values recorded in the past data area. For example, the reference values are average values of the past data of the adjust values and are updated periodically. Thus, the CPU 7a corresponds to the deterioration detecting unit in claim and the deterioration detecting unit 15 in this embodiment.

When the deterioration is not detected in the deterioration detecting process (N at step S14) , the CPU 7a immediately starts an action of read/playback of the disk 1 (step S16) , and stops the process. Conversely, when the deterioration is detected (Y at step S14), the CPU 7a makes the display unit 8 show "DETERIORATION OF DISK" (step S15) , and the process goes to step S16.

The user can see "DETERIORATION OF DISK", and recognize that the disk 1 used at the time is deteriorated by circumstance in a car or a scratch, so that the user can take a recovery action for the disk 1 becoming unreadable by making a backup of the disk 1. On the other hand, when a number of the past data of the adjust values is not more than the predetermined quantity (N at step S12) , the CPU 7a does not take an action of detecting deterioration of the disk 1, and immediately proceeds step S16.

According to the aforesaid read/playback apparatus, when the focus adjust, the tracking adjust and the gain adjust are acted normally within the adjustable range, that is when it is judged that there is no malfunction or no performance reduction of the read/playback apparatus, the deterioration of the disk 1 is detected based on the adjust values. Thereby, the malfunction or the performance reduction of the read/playback apparatus is not detected as the deterioration of the disk 1, so that the deterioration of the disk 1 can be detected securely. By using the focus adjust, the tracking adjust and the gain adjust those are acted usually on reading, the deterioration of the disk 1 can be detected. Therefore, further structures are not required for detecting the deterioration of the disk 1, so that the deterioration of the disk 1 can be detected at a low cost.

According to the above read/playback apparatus, the deterioration of the disk 1 is detected based on the differences of the present adjust values and the reference values determined by the past data of the adjust values. Since the reference values are determined by the past data, the reference values are changed in accordance with a dirt or deterioration of the read/playback apparatus. Thereby, the malfunction or the performance reduction of the read/playback apparatus is not detected as the deterioration of the disk 1, so that the deterioration of the disk 1 can be detected securely. According to the above read/playback apparatus, when the past data of the adjust values more than the predetermined quantity is not recorded, the deterioration of the disk 1 never be detected, so that the deterioration of the disk 1 can be detected more securely.

According to the aforesaid embodiment, for making the value of the RF signal constant, the gain adjust of the RF amplifier 4 is acted. The read/playback apparatus can adjust the quantity of light of the light beam from the optical pick-up 3 for making the values of RF signal constant, and the deterioration of the disk 1 can be detected based on an adjust value of the quantity of light thereof.

According to the embodiment, by the adjust values of focus adjust, the tracking adjust and the gain adjust, the deterioration of the disk 1 is detected. Adjust values are not limited as above embodiment, but adjust values, which change according to deterioration of the disk 1, can be used.

According to the above embodiment, when the differences of the present adjust value and the reference values determined by the past data are more than the threshold values, the deterioration of the disk 1 is detected. It is not limited to be the above embodiment, for example, a method without determining the reference values can judge that the current adjust values change largely from the past data of the adjust values.

According to the above embodiment, one threshold value is determined for comparing with the difference. A plurality of threshold values can be determined for detecting the deterioration of the disk 1 so that degrees of the deterioration of the disk 1 corresponding to the difference (for example, much deteriorated, little deteriorated) can be shown in the display unit.

According to the above embodiment, by using the automatic adjustment that is acted when the management information is read before starting playback of the data recorded on the disk 1, deterioration of the disk a is detected. An apparatus that acts automatic adjustment during playback of the data can detect the deterioration of the disk 1 based on the adjust values thereof.

According to the above embodiment, the reference values are determined by the past data of the adjust values. In case that the past data of the adjust values cannot be stored, the deterioration of the disk can be detected by using the predetermined reference values.

## Claims

1. A read apparatus comprising:
a read unit for reading reflected light of light beam irradiated on a disk; and
an adjust unit for adjusting the read unit in correspondence with a result of reading by the read unit,
further comprising:
a deterioration detecting unit for detecting deterioration of the disk in accordance with an adjust value of the read unit, which is adjusted within adjustable range of the adjust unit.

2. The read apparatus according to claim 1 , wherein the read unit includes an optical pick-up to irradiate the disk, and the adjust unit to adjust the optical pick-up.

3. The read apparatus according to claim 2, wherein the optical pick-up includes an obj ective lens for converging the light beam on the disk, and the adjust unit adjusts a position of the objective lens in a direction of moving close to and apart from the disk so as to converge the light beam on the disk.

4. The read apparatus according to claim 2 or 3, wherein the optical pick-up includes an objective lens for converging the light beam on the disk, and the adjust unit adjusts a position of the objective lens in a direction of a radius of the disk so as to make the light beam follow a track on the disk.

5. The read apparatus according to any one of claims 2-4, wherein the adjust unit adjusts a quantity of light of the light beam to be irradiated so as to make the reflected light of the light beam constant.

6. The read apparatus according to any one of claims 1-5, wherein the read unit read the reflected light to convert the reflected light to an electric signal, and the adjust unit adjusts a gain of amplification of the electric signal.

7. The read apparatus according to any one of claims 1-6, further comprising a recording unit for recording past data of the adjust values of the read unit by the adjust unit, wherein the deterioration detecting unit detects the deterioration of the disk by comparing the past data of the adjust values the read unit and the adj ust value of the read unit, which is adjusted within adjustable range of the adjust unit.

8. The read apparatus according to claim 7, wherein the deterioration detecting unit does not detect the deterioration of the disk until the past data of the adjust values more than a predetermined quantity is recorded.

9. The read apparatus according to claim 7 or 8, the deterioration detecting unit defines a reference adjust value based on the past data of the adjust values and detects the deterioration of the disk by a differential value of the reference value and the adjust value of the read unit.

10. The read apparatus according to any one of claims 1-9, further comprising a notifying unit to notify that the deterioration detecting unit detects the deterioration of the disk.

11. A method of detecting deterioration of a disk, by using a read apparatus comprising a read unit for reading reflected light of light beam irradiated on a disk and an adjust unit for adjusting the read unit in correspondence with a result of reading by the read unit, comprising a step of detecting deterioration of the disk in accordance with an adjust value of the read unit, which is adjusted within adjustable range of the adjust unit.
